# EUROPEAN PATENT SPECIFICATION

(11) **EP 2 957 738 B1**
(45) Date of publication and mention of the grant of the patent: **24.10.2018**
(21) Application number: 14751687.6
(22) Date of filing: 17.01.2014
(51) Int. Cl.: F02M 26/00, F01N 3/20, F01N 3/035, F01N 13/00

(54) **ENGINE EXHAUST-GAS PURIFICATION DEVICE**
MOTORABGASREINIGUNGSVORRICHTUNG
DISPOSITIF DE PURIFICATION DE GAZ D'ÉCHAPPEMENT DE MOTEUR

(30) Priority: 14.02.2013 JP 2013026461
(43) Date of publication of application: 23.12.2015
(73) Proprietor: Mitsubishi Jidosha Kogyo Kabushiki Kaisha, Tokyo 108-8410 (JP)
(72) Inventor: TSUNEKAWA, Kiyoka, Tokyo 108-8410 (JP)
(74) Representative: Vossius & Partner Patentanwälte Rechtsanwälte mbB
(86) International application number: PCT/JP2014/050800
(87) International publication number: WO 2014/125869

(56) References cited:
- EP-A2- 2 083 157
- DE-A1-102009 057 799
- JP-A- 2005 016 495
- JP-A- 2005 016 495
- JP-A- 2008 064 063
- JP-A- 2008 291 671

## Description

### Technical Field

The present invention relates to an exhaust gas purifying apparatus of an engine, and more particularly to an exhaust gas purifying apparatus of an engine including an exhaust gas purifying catalyst using a reducing agent and an exhaust gas recirculation apparatus.

### Background Art

The exhaust passage of the engine includes an exhaust gas purifying apparatus for purifying an exhaust gas. For example, there is an exhaust passage of a diesel engine including a diesel particulate filter and having a function to collect particulate matter (PM) from the exhaust gas. There is further known an exhaust passage of the diesel engine including an oxidation catalyst on an upstream side of the diesel particulate filter, in which a fuel is supplied to the oxidation catalyst to burn the fuel to raise an exhaust gas temperature, thereby to burn and remove the PM collected in the diesel particulate filter. There is still further known an exhaust passage of the diesel engine including a selective reduction catalyst for reducing and removing NOx in the exhaust gas using a reducing agent such as urea water.

In addition, there is known an exhaust gas recirculation apparatus for use as a method of reducing the amount of NOx emissions from the engine. As an example of the exhaust gas recirculation apparatus, there is known a high-pressure exhaust gas recirculation apparatus which recirculates a high-temperature high-pressure exhaust gas from an exhaust manifold into an intake manifold. In addition, in the engine having a turbocharger, an increase in intake pressure makes it difficult to recirculate the exhaust gas into the intake passage, and hence there has been developed a low-pressure exhaust gas recirculation apparatus which recirculates a low-pressure exhaust gas on a downstream side into the intake passage on an upstream side of a compressor by a turbine of the turbocharger.

For example, Patent Document 1 discloses a configuration including an oxidation catalyst, a diesel particulate filter, and a selective reduction catalyst, which are provided, in order from the upstream side, on the downstream side of the turbine of the turbocharger located in the exhaust passage of the diesel engine, in which a reducing agent such as urea water is supplied to the exhaust passage between the diesel particulate filter and the selective reduction catalyst. The configuration in Patent Document 1 further includes a high-pressure exhaust gas recirculation apparatus and a low-pressure exhaust gas recirculation apparatus, in which the low-pressure exhaust gas recirculation apparatus introduces the exhaust gas from the exhaust passage between the diesel particulate filter and the selective reduction catalyst and recirculates the exhaust gas into the intake passage on the upstream side of the compressor.

For another example, Patent Document 2 relates to an exhaust system. The system comprises a first treatment device situated to receive a flow of exhaust and convert a first constituent of the exhaust to a second constituent The system also comprises a second treatment device located downstream of the first treatment device to reduce the first and second constituents. Further, a sensor is also present in the system that is configured to generate a signal indicative of one of a temperature and an oxygen concentration of the exhaust. Finally, the system includes a controller that is in communication with the sensor and being configured to vary the other of the temperature and the oxygen concentration based on the signal such that a desired amount of the first constituent is converted to the second constituent by the first treatment device prior to reduction by the second treatment device.

### Prior Art Document

### Patent Document

Patent Document 1: Japanese Patent No. 4730336 B Patent Document 2: EP 2 083 157 A2

### Disclosure of the Invention

### Problems to be solved by the Invention

However, the engine having a configuration like Patent Document 1 including the low-pressure exhaust gas recirculation apparatus which recirculates the exhaust gas from the exhaust passage between the diesel particulate filter and the selective reduction catalyst into the intake passage may have a possibility that even if the exhaust gas introducing position of the low-pressure exhaust gas recirculation apparatus is close to the upstream side than the urea water supply position, when pulsation occurs in the exhaust gas at a transient operation or the like, the exhaust gas introducing position of the exhaust gas recirculation passage is under a negative pressure and the exhaust gas flows back, resulting in that the urea water together with the exhaust gas may flow into the exhaust gas recirculation passage of the low-pressure exhaust gas recirculation apparatus. Then, when the urea water flows into the exhaust gas recirculation passage of the low-pressure exhaust gas recirculation apparatus, urea may precipitate and deposit in the exhaust gas recirculation passage or may corrode the devices such as a cooling device interposedly provided at the exhaust gas recirculation passage and further the exhaust gas recirculation passage itself and the intake passage of the engine.

The present invention has been made to solve such problems, and an object of the present invention is to provide an exhaust gas purifying apparatus of an engine including an exhaust gas purifying catalyst using a reducing agent and an exhaust gas recirculation passage, in which the engine can prevent the reducing agent from flowing into the exhaust gas recirculation passage.

### Means for Solving the Problems

In order to achieve the above object, a first aspect of the present invention is directed to an exhaust gas purifying apparatus of an engine comprising: a reducing agent supply unit which is provided in an exhaust passage of the engine, and which supplies a reducing agent into the exhaust passage; an exhaust gas purifying catalyst which is provided in the exhaust passage on a downstream side of the reducing agent supply unit, and which reduces and purifies nitrogen oxide contained in an exhaust gas in the exhaust passage by the reducing agent supplied from the reducing agent supply unit; a reducing agent supply control unit which controls operation of the reducing agent supply unit; an exhaust gas recirculation passage which introduces the exhaust gas from the exhaust passage at an upstream side from a supply position of the reducing agent by the reducing agent supply unit, and recirculates the exhaust gas into an intake passage of the engine; and a reducing agent supply regulating unit which stops supply of the reducing agent from the reducing agent supply unit in an operating state of the engine where an exhaust gas introduction section of the exhaust gas recirculation passage is under a negative pressure when the exhaust gas is recirculated through the exhaust gas recirculation passage.

A second aspect of the present invention according to the first aspect of the present invention includes an opening and closing unit which opens and closes the exhaust gas recirculation passage based on the operating state of the engine, in which the reducing agent supply regulating unit stops the supply of the reducing agent from the reducing agent supply unit when the opening and closing unit switches from a closed state to an open state.

In a third aspect of the present invention according to the first or second aspect of the present invention, the engine has a first operating region of the engine which is set based on the operating state of the engine, and which uses both recirculation of the exhaust gas through the exhaust gas recirculation passage and supply of the reducing agent, and the reducing agent supply regulating unit stops the supply of the reducing agent from the reducing agent supply unit when the operating state of the engine transits from the high-load high-speed region to the first operating region.

In a fourth aspect of the present invention according to any one of the first to third aspects of the present invention, the engine includes a first operating region configured to use both recirculation of the exhaust gas through the exhaust gas recirculation passage and supply of the reducing agent; and a second operating region which is a higher rotation or higher load region than the first operating region, and in which the exhaust gas is not recirculated through the exhaust gas recirculation passage but the reducing agent is supplied, and the reducing agent supply regulating unit stops the supply of the reducing agent from the reducing agent supply unit when the operating region of the engine transits from the second operating region to the first operating region.

### Advantageous Effects of the Invention

According to the exhaust gas purifying apparatus of the engine of the present invention, the reducing agent supply unit stops the supply of the reducing agent in the operating state of the engine where the exhaust gas introduction section of the exhaust gas recirculation passage is under a negative pressure when the exhaust gas is introduced through the exhaust gas recirculation passage. Thus, in the operating state, even if the exhaust gas introduction section of the exhaust gas recirculation passage is under a negative pressure, and the exhaust gas flows back through an exhaust passage and flows into the exhaust gas recirculation passage, the reducing agent supplied from the reducing agent supply unit can be prevented from flowing into the exhaust gas recirculation passage. Thus, the present invention can not only prevent a component of the reducing agent from depositing in the exhaust gas recirculation passage but also protect the exhaust gas recirculation passage, the devices provided in the exhaust gas recirculation passage, and the intake passage.

### Brief Description of the Drawings

FIG. 1 is a schematic configuration view of an intake exhaust system of a diesel engine according to an embodiment of the present invention.
FIG. 2 is explanatory drawing illustrating a use region of an exhaust gas purifying apparatus according to the embodiment of the present invention.

### Mode for Carrying out the Invention

Hereinafter, the embodiment of the present invention will be described based on the drawings.

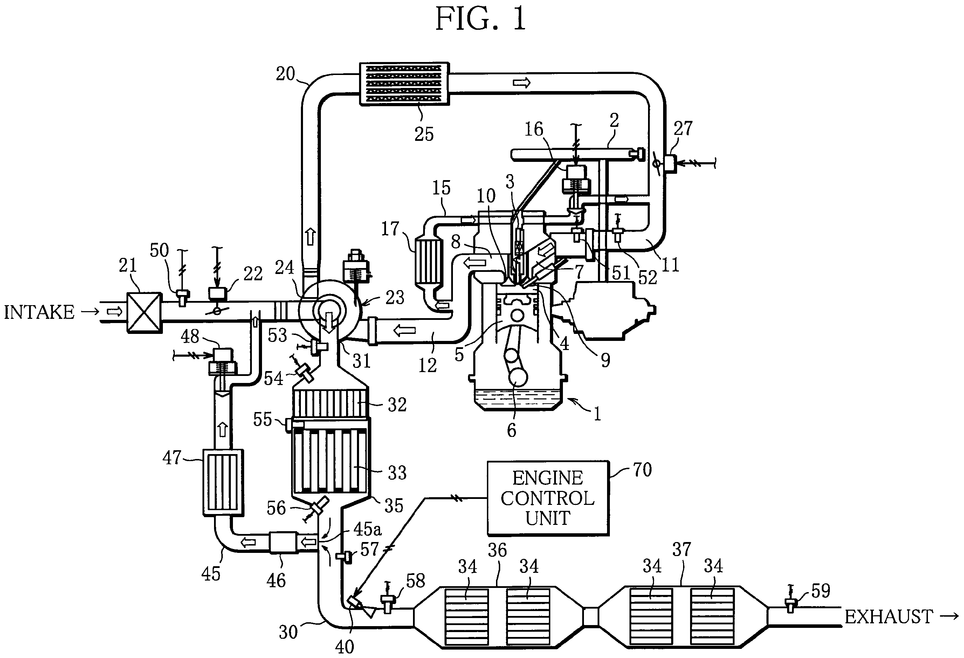

FIG. 1 is a schematic configuration view of an intake exhaust system of a diesel engine (hereinafter referred to as an engine 1) according to an embodiment to which an exhaust gas purifying apparatus of the present invention is applied.

The engine 1 is mounted on a vehicle as a drive source and is a multi-cylinder in-cylinder direct injection type engine (for example, a common rail diesel engine) including a turbocharger 23. More specifically, the engine 1 is configured such that a high pressure fuel accumulated in a common rail 2 is supplied to a fuel injection nozzle 3 of each cylinder and the fuel can be injected from the fuel injection nozzle 3 into a combustion chamber 4 of each cylinder at any injection timing and injection quantity.

An up and down slidable piston 5 is provided in each cylinder of the engine 1. The piston 5 is coupled to a crankshaft 6 through a con rod. A flywheel is provided at one end portion of the crankshaft 6.

The combustion chamber 4 communicates with an intake port 7 and an exhaust port 8.

The intake port 7 includes an intake valve 9 for performing communication and blocking between the combustion chamber 4 and the intake port 7. The exhaust port 8 includes an exhaust valve 10 for performing communication and blocking between the combustion chamber 4 and the exhaust port 8.

An intake manifold 11 for distributing the intake air to each cylinder is provided upstream of the intake port 7 so as to communicate with the intake port 7. An exhaust manifold 12 for collecting the exhaust gas discharged from each cylinder is provided downstream of the exhaust port 8 so as to communicate with the exhaust port 8.

A high-pressure exhaust gas recirculation passage 15 for returning some of the exhaust gases back to the intake, namely, for introducing high-temperature high-pressure exhaust gases into the intake is provided between the intake manifold 11 and the exhaust manifold 12. An exhaust gas recirculation valve 16 for adjusting the amount of high-temperature high-pressure exhaust gas to be returned to the intake is interposedly provided at the high-pressure exhaust gas recirculation passage 15. An exhaust gas recirculation cooler 17 for cooling the exhaust gas to be introduced into the intake manifold 11 is provided at the high-pressure exhaust gas recirculation passage 15.

The intake manifold 11 is connected to an intake pipe 20 as an intake passage. The intake pipe 20 includes, in order from the upstream side to the intake manifold 11, an air cleaner 21 for removing dust in fresh air, an electronic control throttle valve 22 for adjusting the flow rate of the low-pressure exhaust gas introduced from a low-pressure exhaust gas recirculation passage 45 to be described later while adjusting the flow rate of the fresh air, a compressor 24 of the turbocharger 23, an intercooler 25 for cooling the intake air compressed by the compressor 24 to a high temperature, and an electronic control throttle valve 27 for adjusting the flow rate of the exhaust gas introduced from the high-pressure exhaust gas recirculation passage 15.

An exhaust pipe 30 as an exhaust passage downstream of the exhaust manifold 12 includes, in order from the upstream side, a turbine 31 of the turbocharger 23, an oxidation catalyst 32 for oxidizing oxidizable components in the exhaust gas, a diesel particulate filter 33 for collecting and burning particulate matter mainly composed of graphite in the exhaust gas, and a selective reduction catalyst 34 (exhaust gas purifying catalyst) for reducing and purifying nitrogen oxides (hereinafter referred to as NOx) in the exhaust gas using ammonia. Note that the oxidation catalyst 32 and the diesel particulate filter 33 are housed in the same casing 35 and are disposed in an engine room of the vehicle. Note also that the selective reduction catalyst 34 is divided into four portions, which are arranged two by two in series in casings 36 and 37 and are disposed under the floor of the vehicle.

A urea water injector 40 (reducing agent supply unit) for injecting and supplying urea water is disposed in the exhaust pipe 30 between the diesel particulate filter 33 and the selective reduction catalyst 34 located most upstream. Urea water is supplied to the urea water injector 40 from an unillustrated urea water tank mounted on the vehicle. An injection position of the urea water injector 40 is set so that the urea water injected from the urea water injector 40 into the exhaust pipe 30 is sufficiently hydrolyzed by exhaust heat to generate ammonia so as to reach the selective reduction catalyst 34.

Further, a low-pressure exhaust gas recirculation passage 45 (exhaust gas recirculation passage) is provided so as to communicate the intake pipe 20 between an electronic control throttle valve 22 and the compressor 24 of the turbocharger 23 with the exhaust pipe 30 between the diesel particulate filter 33 and the urea water injector 40. The low-pressure exhaust gas recirculation passage 45 has a function to introduce (recirculate), into the intake, some of the low-temperature low-pressure exhaust gases passing through the turbine 31, the oxidation catalyst 32, and the diesel particulate filter 33.

The low-pressure exhaust gas recirculation passage 45 includes an exhaust gas recirculation filter 46 for removing foreign matter from the exhaust gas to recirculate to the intake, an exhaust gas recirculation cooler 47 for cooling the exhaust gas to recirculate, and an exhaust gas recirculation valve 48 (opening and closing unit) for opening and closing the low-pressure exhaust gas recirculation passage 45.

An intake air temperature sensor 50 for detecting the temperature of the intake air (fresh air) is provided in the intake pipe 20 between the air cleaner 21 and the electronic control throttle valve 22. The intake manifold 11 includes an intake air temperature sensor 51 for detecting the temperature of the intake air flowing into the combustion chamber 4 of the engine 1 and an oxygen concentration sensor 52 for detecting the oxygen concentration in the intake air.

An oxygen concentration sensor 53 for detecting the oxygen concentration in the exhaust gas is provided in the exhaust pipe 30 between the turbine 31 and the oxidation catalyst 32.

An exhaust gas temperature sensor 54 for detecting the temperature of the exhaust gas flowing into the oxidation catalyst 32 is provided upstream of the oxidation catalyst 32 of the casing 35. An exhaust gas temperature sensor 55 for detecting the temperature of the exhaust gas flowing from the oxidation catalyst 32 is provided between the oxidation catalyst 32 and the diesel particulate filter 33 in the casing 35. In addition, an exhaust gas temperature sensor 56 for detecting the temperature of the exhaust gas flowing from the diesel particulate filter 33 is provided downstream of the diesel particulate filter 33 of the casing 35.

An NOx sensor 57 for detecting NOx concentration in the exhaust gas is provided in the exhaust pipe 30 between the urea water injector 40 and an exhaust gas introduction section 45a of the low-pressure exhaust gas recirculation passage 45 for introducing the exhaust gas from the exhaust pipe 30.

An exhaust gas temperature sensor 58 for detecting the temperature of the exhaust gas between the urea water injector 40 and the selective reduction catalyst 34 is provided in the exhaust pipe 30 near the urea water injector 40.

An NOx sensor 59 for detecting NOx concentration in the exhaust gas flowing out of the most downstream selective reduction catalyst 34 is provided in the exhaust pipe 30 downstream of the selective reduction catalyst 34 located most downstream.

An engine control unit 70 (reducing agent supply control unit and reducing agent supply regulating unit) is electrically connected to various sensors including the intake air temperature sensors 50 and 51, the oxygen concentration sensors 52 and 53, the exhaust gas temperature sensors 54, 55, 56, and 58, the NOx sensors 57 and 59, as well as various devices including the fuel injection nozzle 3, the electronic control throttle valves 22 and 27, the exhaust gas recirculation valves 16 and 48, and the urea water injector 40.

The engine control unit 70 is configured to include input/output devices, storage devices (ROM, RAM, nonvolatile RAM, etc.,), timers, the central processing unit (CPU), and the like. The engine control unit 70 receives information such as detection information and the accelerator operation amount information from the aforementioned sensors, and based on the various information, calculates the fuel injection amount, the fuel injection timing, the opening degree of the electronic control throttle valves 22 and 27, and the exhaust gas recirculation valves 16 and 48, the urea water injection amount, and the urea water injection timing, thereby to perform the operation control on the various devices and perform the operation control on the engine 1.

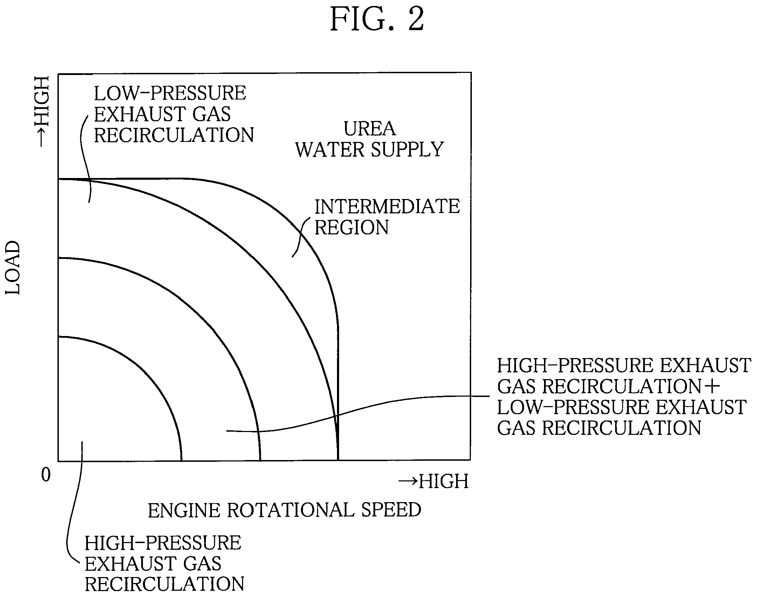

FIG. 2 is explanatory drawing illustrating a use region of the exhaust gas purifying apparatus.

As illustrated in FIG. 2, based on an operating state (rotational speed and load) of the engine 1, the engine control unit 70 performs three exhaust gas purifying apparatuses: high-pressure exhaust gas recirculation by the high-pressure exhaust gas recirculation passage 15, low-pressure exhaust gas recirculation by the low-pressure exhaust gas recirculation passage 45, and exhaust gas purification in the selective reduction catalyst 34 by the urea water supply.

For example, of the three exhaust gas purifying apparatuses, only exhaust gas purification by the high-pressure exhaust gas recirculation is performed in the low-load low-speed region, only exhaust gas purification by the low-pressure exhaust gas recirculation is performed in the medium-load medium-speed region, and only exhaust gas purification by the urea water supply is performed in the high-load high-speed region (second operating region). In addition, a region using both the high-pressure exhaust gas recirculation and the low-pressure exhaust gas recirculation is provided between the low-load low-speed region and the medium-load medium-speed region. Further, an intermediate region (first operating region) using both the low-pressure exhaust gas recirculation and the urea water supply is provided between the medium-load medium-speed region and high-load high-speed region.

According to the present embodiment, the engine control unit 70 performs a control of stopping injection and supply of the urea water from the urea water injector 40 for a predetermined time when the operating state of the engine 1 transits from the high-load high-speed region to the intermediate region. In the engine 1 including the thus configured intake exhaust system, when the exhaust gas recirculation valve 48 is opened, the exhaust pipe 30 downstream of the diesel particulate filter 33 communicates with the intake pipe 20 between the electronic control throttle valve 22 and the compressor 24 of the turbocharger 23 through the low-pressure exhaust gas recirculation passage 45. For example, when the operating state of the engine 1 is in the transient operating state of transiting from the high-load high-speed region to the intermediate region, the exhaust gas recirculation valve 48 switches from the closed state to the open state.

Then, when the operating state of the engine 1 is changed and the exhaust gas recirculation valve 48 switches from the closed state to the open state, pulsation occurs in the exhaust gas of the engine 1, resulting in that the exhaust gas introduction section 45a serving as an entrance of the low-pressure exhaust gas recirculation passage 45 may be under a negative pressure. Thus, even if the supply position of the urea water by the urea water injector 40 is closer to the downstream side than the exhaust gas introduction section 45a of the low-pressure exhaust gas recirculation passage 45, the exhaust gas may flow back and flow into the low-pressure exhaust gas recirculation passage 45, resulting in that the urea water following the flowed back exhaust gas may flow into the low-pressure exhaust gas recirculation passage 45.

When the operating state of the engine 1 transits from the high-load high-speed region to the intermediate region, that is, when the exhaust gas recirculation valve 48 switches from the closed state to the open state, the present embodiment stops the supply of the urea water for a predetermined time, and hence can prevent the urea water from flowing into the low-pressure exhaust gas recirculation passage 45 even if the exhaust gas flows back and flows into the low-pressure exhaust gas recirculation passage 45. Particularly, when the operating state of the engine 1 transits from the high-load high-speed region to the intermediate region, a negative pressure tends to occur in the exhaust pipe 30, and hence the regulation of the supply of the urea water at this timing can effectively prevent the urea water from flowing into the low-pressure exhaust gas recirculation passage 45.

Thus, the prevention of the urea water from flowing into the low-pressure exhaust gas recirculation passage 45 can prevent urea from precipitating from the urea water in the low-pressure exhaust gas recirculation passage 45 and depositing in the low-pressure exhaust gas recirculation passage 45. Note that the low-pressure exhaust gas recirculation passage 45 includes the exhaust gas recirculation cooler 47 and the exhaust gas recirculation filter 46. Thus, the prevention can also prevent urea from depositing on these devices and prevent these devices from failing. In addition, the prevention can also prevent reduction in recirculation rate of the low-pressure exhaust gas due to an increase in passing resistance by deposit of the urea in the low-pressure exhaust gas recirculation passage 45. In addition, the prevention can also prevent the urea water from passing through the low-pressure exhaust gas recirculation passage 45 and flowing into the intake pipe 20, and hence can protect the intake pipe 20.

Note that when the operating state of the engine 1 remains in the intermediate region for a predetermined time or more, the supply of the urea water starts. Thus, when the operating state of the engine 1 is stable in this way, the pulsation of the exhaust gas is reduced and a negative pressure in the exhaust gas introduction section 45a of the low-pressure exhaust gas recirculation passage 45 is eliminated, resulting in that the exhaust gas stably passes through the urea water injector 40 and flows into the selective reduction catalyst 34. Thus, any injection and supply of the urea water at this time makes it difficult to cause the urea water to flow into the low-pressure exhaust gas recirculation passage 45. This makes it possible to use both low-pressure exhaust gas recirculation and urea water supply in the intermediate region and ensure a sufficient exhaust gas purification performance.

Note that when the operating state of the engine 1 transits from the high-load high-speed region to the intermediate region, the aforementioned embodiment regulates the injection of the urea water from the urea water injector 40, but when the exhaust gas recirculation valve 48 is switches from the closed state to the open state, control may be performed so as to regulate the injection of the urea water from the urea water injector 40. Alternatively, confirmation is made in advance of the operating state of the engine 1 where the exhaust gas introduction section 45a of the low-pressure exhaust gas recirculation passage 45 is under a negative pressure, and in the operating state, the injection of the urea water may start. For example, the operating state of the engine 1 where the exhaust gas introduction section 45a is under a negative pressure is a state where pulsation occurs in the exhaust gas, and is assumed to be a transient operating state.

Note that the present invention is not limited to the aforementioned embodiment, but may be widely applied to an exhaust gas purifying apparatus of an engine including both an exhaust gas recirculation passage and an apparatus for supplying a reducing agent to an exhaust gas and purifying the exhaust gas in the exhaust gas purifying catalyst.

### Explanation of Reference Signs

1 engine
20 intake pipe (intake passage)
30 exhaust pipe (exhaust passage)
34 selective reduction catalyst (exhaust gas purifying catalyst)
40 urea water injector (reducing agent supply unit)
45 low-pressure exhaust gas recirculation passage
45a exhaust gas introduction section
48 exhaust gas recirculation valve (opening and closing unit)
70 engine control unit (reducing agent supply control unit, reducing agent supply regulating unit)

## Claims

1. An exhaust gas purifying apparatus of an engine comprising:
a reducing agent supply unit (40) which is provided in an exhaust passage (30) of the engine (1) having a turbocharger (23), and which supplies a reducing agent into the exhaust passage (30);
an exhaust gas purifying catalyst (34) which is provided in the exhaust passage (30) on a downstream side of the reducing agent supply unit (40), and which reduces and purifies nitrogen oxide contained in an exhaust gas in the exhaust passage (30) by the reducing agent supplied from the reducing agent supply unit (40);
a reducing agent supply control unit (70) which controls operation of the reducing agent supply unit (40);
a filter (33) which is provided in the exhaust passage (30) closer to a downstream side than a turbine (31) of the turbocharger (23), which includes the reducing agent supply unit (40) between the filter (33) and the exhaust gas purifying catalyst (34), and which collects and burns particulate matter mainly composed of graphite contained in the exhaust gas; and
an exhaust gas recirculation passage (45) which introduces the exhaust gas from the exhaust passage (30) between the filter (33) and a supply position of the reducing agent from the reducing agent supply unit (40) and recirculates the exhaust gas between a throttle valve (22) of an intake passage (20) of the engine (1) and a compressor (24) of the turbocharger (23) and an opening and closing unit which opens and closes the exhaust gas recirculation passage based on the operating state of the engine, **characterized by** further comprising
a reducing agent supply regulating unit (70) which stops supply of the reducing agent from the reducing agent supply unit (40) in an operating state of the engine (1) where an exhaust gas introduction section (45a) of the exhaust gas recirculation passage (45) is under a negative pressure when the opening and closing unit switches from a closed state to an open state and the exhaust gas flows back when the exhaust gas is recirculated through the exhaust gas recirculation passage (45).

2. The exhaust gas purifying apparatus of the engine according to claim 1, **characterized by** further comprising
an opening and closing unit (48) which opens and closes the exhaust gas recirculation passage (45) based on the operating state of the engine (1), wherein
the reducing agent supply regulating unit (70) stops the supply of the reducing agent from the reducing agent supply unit (40) when the opening and closing unit (48) switches from a closed state to an open state.

3. The exhaust gas purifying apparatus of the engine according to claim 1 or 2, **characterized in that**
the engine (1) has a first operating region of the engine (1) which is set based on the operating state of the engine (1), and which uses both recirculation of the exhaust gas through the exhaust gas recirculation passage (45) and supply of the reducing agent, and
the reducing agent supply regulating unit (70) stops the supply of the reducing agent from the reducing agent supply unit (40) when the operating state of the engine (1) transits from high-load high-speed region to the first operating region.

4. The exhaust gas purifying apparatus of the engine according to any one of claims 1 to 3, **characterized in that** the engine (1) includes
a first operating region configured to use both recirculation of the exhaust gas through the exhaust gas recirculation passage (45) and supply of the reducing agent; and
a second operating region which is a higher rotation or higher load region than the first operating region, and in which the exhaust gas is not recirculated through the exhaust gas recirculation passage (45) but the reducing agent is supplied, wherein
the reducing agent supply regulating unit (70) stops the supply of the reducing agent from the reducing agent supply unit (40) when the operating region of the engine (1) transits from the second operating region to the first operating region.

## Patentansprüche

1. Abgasreinigungsvorrichtung eines Verbrennungsmotors, die aufweist:
eine Reduktionsmittel-Zuführungseinheit (40), die in einem Abgasdurchgang (30) des Verbrennungsmotors (1) mit einem Turbolader (23) bereitgestellt ist und die ein Reduktionsmittel in dem Abgasdurchgang (30) zuführt;
einen Abgasreinigungskatalysator (34), der in dem Abgasdurchgang (30) auf einer strömungsabwärtigen Seite der Reduktionsmittel-Zuführungseinheit (40) bereitgestellt ist und der Stickoxid, das in einem Abgas in den Abgasdurchgang (30) enthalten ist, durch das Reduktionsmittel, das von der Reduktionsmittel-Zuführungseinheit (40) zugeführt wird, reduziert und reinigt;
eine Reduktionsmittel-Zuführungssteuereinheit (70), die den Betrieb der Reduktionsmittel-Zuführungseinheit (40) steuert;
ein Filter (33), das in dem Abgasdurchgang (30) näher an einer strömungsabwärtigen Seite als eine Turbine (31) des Turboladers (23) bereitgestellt ist, das die Reduktionsmittel-Zuführungseinheit (40) zwischen dem Filter (33) und dem Abgasreinigungskatalysator (34) aufweist, und das teilchenförmige Materie, die hauptsächlich aus in dem Abgas enthaltenem Graphit besteht, sammelt und verbrennt; und
einen Abgasrückführungsdurchgang (45), der das Abgas von dem Abgasdurchgang (30) zwischen dem Filter (33) und einer Zuführungsposition des Reduktionsmittels von der Reduktionsmittel-Zuführungseinheit (40) einleitet und das Abgas zwischen einem Drosselventil (22) eines Ansaugdurchgangs (20) des Verbrennungsmotors (1) und einem Kompressor (24) des Turboladers (23) rückführt, und einer Öffnungs- und Schließeinheit, die den Abgasrückführungsdurchgang basierend auf dem Betriebszustand des Verbrennungsmotors öffnet und schließt, **dadurch gekennzeichnet, dass** er ferner aufweist
eine Reduktionsmittel-Regulierungseinheit (70), die die Zufuhr des Reduktionsmittels von der Reduktionsmittel-Zuführungseinheit (40) in einem Betriebszustand des Verbrennungsmotors (1) stoppt, falls ein Abgaseinleitungsabschnitt (45a) des Abgasrückführungsdurchgangs (45) unter einem Unterdruck steht, wenn die Öffnungs- und Schließeinheit von einem geschlossenen Zustand auf einen offenen Zustand umschaltet, und das Abgas zurückströmt, wenn das Abgas durch den Abgasrückführungsdurchgang (45) rückgeführt wird.

2. Abgasreinigungsvorrichtung des Verbrennungsmotors nach Anspruch 1, **dadurch gekennzeichnet, dass** sie ferner aufweist:
eine Öffnungs- und Schließeinheit (48), die den Abgasrückführungsdurchgang (45) basierend auf dem Betriebszustand des Verbrennungsmotors (1) öffnet und schließt, wobei
die Reduktionsmittel-Zuführungseinheit (70) die Zuführung des Reduktionsmittels von der Reduktionsmittel-Zuführungseinheit (40) stoppt, wenn die Öffnungs- und Schließeinheit (48) von einem geschlossenen Zustand auf einen offenen Zustand umschaltet.

3. Abgasreinigungsvorrichtung des Verbrennungsmotors nach Anspruch 1 oder 2, **dadurch gekennzeichnet, dass**
der Verbrennungsmotor (1) einen ersten Betriebsbereich des Verbrennungsmotors (1) hat, der basierend auf einem Betriebszustand des Verbrennungsmotors (1) festgelegt wird und der sowohl die Rückführung des Abgases durch den Abgasrückführungsdurchgang (45) als auch die Zuführung des Reduktionsmittels nutzt, und
die Reduktionsmittel-Zuführungseinheit (70) die Zufuhr des Reduktionsmittels von der Reduktionsmittel-Zuführungseinheit (40) stoppt, wenn der Betriebszustand des Verbrennungsmotors (1) von dem Hochlasthochdrehzahlbereich in den ersten Betriebsbereich übergeht.

4. Abgasreinigungsvorrichtung des Verbrennungsmotors nach einem der Ansprüche 1 bis 3, **dadurch gekennzeichnet, dass** der Verbrennungsmotor (1) aufweist:
einen ersten Betriebsbereich, der konfiguriert ist, um sowohl die Rückführung des Abgases durch den Abgasrückführungsdurchgang (45) als auch die Zuführung des Reduktionsmittels zu nutzen; und
einen zweiten Betriebsbereich, der ein Bereich mit höherer Drehzahl oder höherer Last als der erste Betriebsbereich ist und in dem das Abgas nicht durch den Abgasrückführungsdurchgang (45) rückgeführt wird, sondern das Reduktionsmittel zugeführt wird, wobei
die Reduktionsmittel-Zuführungsregulierungseinheit (70) die Zufuhr des Reduktionsmittels von der Reduktionsmittel-Zuführungseinheit (40) stoppt, wenn der Betriebsbereich des Verbrennungsmotors (1) von dem zweiten Betriebsbereich in den ersten Betriebsbereich übergeht.

## Revendications

1. Appareil de purification de gaz d'échappement d'un moteur comprenant :
une unité d'alimentation en agent réducteur (40) qui est prévue dans un passage d'échappement (30) du moteur (1) présentant un turbocompresseur (23), et qui fournit un agent réducteur dans le passage d'échappement (30) ;
un catalyseur de purification de gaz d'échappement (34) qui est prévu dans le passage d'échappement (30) sur un côté en aval de l'unité d'alimentation en agent réducteur (40), et qui réduit et purifie l'oxyde d'azote contenu dans un gaz d'échappement dans le passage d'échappement (30) au moyen de l'agent réducteur fourni à partir de l'unité d'alimentation en agent réducteur (40) ;
une unité de commande d'alimentation en agent réducteur (70) qui commande le fonctionnement de l'unité d'alimentation en agent réducteur (40) ;
un filtre (33) qui est prévu dans le passage d'échappement (30) plus près d'un côté aval qu'une turbine (31) du turbocompresseur (23), qui comprend l'unité d'alimentation en agent réducteur (40) entre le filtre (33) et le catalyseur de purification du gaz d'échappement (34), et qui collecte et brûle la matière particulaire composée principalement de graphite contenue dans le gaz d'échappement ; et
un passage de recirculation de gaz d'échappement (45) qui introduit le gaz d'échappement issu du passage d'échappement (30) entre le filtre (33) et une position d'alimentation de l'agent réducteur issu de l'unité d'alimentation en agent réducteur (40) et assure la recirculation du gaz d'échappement entre un papillon des gaz (22) d'un passage d'admission (20) du moteur (1) et un compresseur (24) du turbocompresseur (23) et une unité d'ouverture et de fermeture qui ouvre et ferme le passage de recirculation de gaz d'échappement sur la base de l'état de fonctionnement du moteur, **caractérisé en ce qu'**il comprend en outre
une unité de régulation d'alimentation en agent réducteur (70) qui interrompt l'alimentation en agent réducteur à partir de l'unité d'alimentation en agent réducteur (40) dans un état de fonctionnement du moteur (1) où une section d'introduction de gaz d'échappement (45a) du passage de recyclage de gaz d'échappement (45) est soumise à une pression négative lorsque l'unité d'ouverture et de fermeture est commutée d'un état fermé vers un état ouvert et le gaz d'échappement reflue lorsque le gaz d'échappement est recyclé à travers le passage de recyclage de gaz d'échappement (45).

2. Appareil de purification de gaz d'échappement du moteur selon la revendication 1, **caractérisé en ce qu'**il comprend en outre
une unité d'ouverture et de fermeture (48) qui ouvre et ferme le passage de recyclage de gaz d'échappement (45) sur la base de l'état de fonctionnement du moteur (1), dans lequel
l'unité de régulation d'alimentation en agent réducteur (70) interrompt l'alimentation en agent réducteur de l'unité d'alimentation en agent réducteur (40) lorsque l'unité d'ouverture et de fermeture (48) est commutée d'un état fermé à un état ouvert.

3. Appareil de purification de gaz d'échappement du moteur selon la revendication 1 ou 2, **caractérisé en ce que**
le moteur (1) possède une première région de fonctionnement du moteur (1) qui est définie sur la base de l'état de fonctionnement du moteur (1), et qui utilise à la fois la recirculation du gaz d'échappement à travers le passage de recirculation de gaz d'échappement (45) et l'alimentation en agent réducteur, et
l'unité de régulation d'alimentation en agent réducteur (70) interrompt l'alimentation en agent réducteur à partir de l'unité d'alimentation en agent réducteur (40) lorsque l'état de fonctionnement du moteur (1) transite de la région à charge élevée et vitesse élevée à la première région de fonctionnement.

4. Appareil de purification de gaz d'échappement du moteur selon l'une quelconque des revendications 1 à 3, **caractérisé en ce que** le moteur (1) comporte
une première région de fonctionnement configurée pour utiliser à la fois la recirculation du gaz d'échappement à travers le passage de recirculation de gaz d'échappement (45) et l'alimentation en agent réducteur ; et
une seconde région de fonctionnement qui est une région à rotation plus élevée ou charge plus élevée que la première région de fonctionnement, et dans laquelle le gaz d'échappement n'est pas recirculé à travers le passage de recirculation de gaz d'échappement (45) mais le gaz réducteur est fourni, dans lequel
l'unité de régulation d'alimentation en agent réducteur (70) interrompt l'alimentation en agent réducteur à partir de l'unité d'alimentation en agent réducteur (40) lorsque la région de fonctionnement du moteur (1) transite de la seconde région de fonctionnement à la première région de fonctionnement.
